(19)

**Europäisches Patentamt**

**European Patent Office**

**Office européen des brevets**

(11)　　**EP 2 944 406 A1**

(12)　　**EUROPEAN PATENT APPLICATION**
published in accordance with Art. 153(4) EPC

(43) Date of publication:
**18.11.2015　Bulletin 2015/47**

(21) Application number: **13871165.0**

(22) Date of filing: **25.12.2013**

(51) Int Cl.:
***B23B 51/00*** *(2006.01)*

(86) International application number:
**PCT/JP2013/084617**

(87) International publication number:
**WO 2014/109230 (17.07.2014 Gazette 2014/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:　**09.01.2013　JP 2013001568**

(71) Applicants:
• **Ayabo Corporation**
**Anjo-shi, Aichi 446-0045 (JP)**
• **Kyushu University,**
**National University Corporation**
**Fukuoka-shi, Fukuoka 812-8581 (JP)**
• **NATIONAL UNIVERSITY CORPORATION OITA UNIVERSITY**
**Oita-shi**
**Oita 870-1192 (JP)**

(72) Inventors:
• **MATSUZAKI, Kenichiro**
**Kagoshima-shi**
**Kagoshima 890-0065 (JP)**
• **RYU, Takahiro**
**Oita-shi**
**Oita 870-1192 (JP)**
• **TSUKAMOTO, Keizo**
**Anjo-shi**
**Aichi 446-0045 (JP)**
• **FUJII, Katsushi**
**Anjo-shi**
**Aichi 446-0045 (JP)**

(74) Representative: **Garavelli, Paolo**
**A.BRE.MAR. S.R.L.**
**Via Servais 27**
**10146 Torino (IT)**

(54)　**GUIDE PART DISPOSITION STRUCTURE AND GUIDE PART DISPOSITION METHOD FOR TIP TOOL FOR CUTTING WORK**

(57)　A guide portion arrangement structure and a guide portion arrangement method arrange a third guide portion in a predetermined position of a drill head for cutting work, thereby stably maintaining an orientation of the drill head and straight movement action of a tip during the cutting. Thus, a favorable surface state of an inner surface of a processed hole can be obtained. The third guide portion is arranged in a position where the effect can be obtained stably and the degree of freedom is high. In a guide portion arrangement structure of a drill head used for cutting work while being supplied with cutting oil, the guide portion contacting an inner surface of a hole of a work piece at an outer periphery of the drill head and receiving a cutting force of a blade portion while maintaining a clearance for passing the cutting oil therethrough, the guide portion includes first to third guide por-tions arranged on the outer periphery of the drill head. As for a portion of each guide portion that is farthest in a radial direction from the center of rotation of the drill head, it is positioned in an angular range of 80 degrees to 100 degrees about the first guide portion, it is positioned in an angular range of 170 degrees to 190 degrees about the second guide portion, and it is positioned in at least one of an angular range of 1 degree to 34 degrees, an angular range of 146 degrees to 179 degrees and an angular range of 326 degrees to 359 degrees about the third guide portion, on a delay side of the blade portion in the direction of the rotation when a position of a cutting edge of the blade portion is at 0 degree.

EP 2 944 406 A1

Fig. 1

（A）

（B）

**Description**

[Technical field]

The present invention relates to a guide portion arrangement structure and a guide portion arrangement method for a tip tool (i.e., drill head) for cutting work that can significantly reduce vibration and the like during solid boring or counter boring (using prepared hole) and generation of a rifling mark, a spiral mark and a tool mark.

[Background technology]

For example, a deep hole boring processing by the solid boring of the BTA (Boring and Trepanning Association) system is performed by attaching a special drill head to a hollow shaft called a boring bar (or boring tube), injecting cutting oil at high pressure through a clearance between the boring bar and a work piece while rotating these tools or the work piece, and discharging chips and the oil through a hollow portion of the boring bar.

In both types of the boring processing, the drill head is attached with a blade portion for cutting and a guide portion, which contacts an inner surface of the hole of the work piece at an outer periphery of the drill head and which receives a cutting force of the blade portion, thereby supporting the tools while providing the clearance for passing the cutting oil. As a prior art example of a drill head of a device used for deep hole processing of the BTA system, there has been described a drill head having first and second guide portions arranged at positions of 90 degrees and 180 degrees respectively from a position of 0 degree of a blade portion in Japanese Patent No. 4951788 official gazette.

Herein, it is assumed that the angle from the position of 0 degree of the blade portion is positive in a direction, in which the blade portion receives a reaction force from the work piece.

As compared to common boring processing, processing using the above-mentioned drill head of the prior art example can bore a hole, which has a relatively large diameter and which is deep with respect to the diameter. However, as shown in the case of the common drilling processing and the like, there is a case where a spiral pattern (processing mark) called a rifling mark, a spiral mark or a tool mark is formed in the processed hole also in the case of the BTA deep hole boring processing. In this case, the degree of accuracy of the product can be lowered, for example, because an error in roundness increases, leading to a defective product. In addition, in order to obtain an inner surface of a hole with high roundness, additional work such as burnishing process or honing process or finishing process will be required, requiring more time and cost.

An invention of a drill head having a third guide portion arranged on a delay side in a direction of rotation from a second guide portion arranged at a position of 180 degrees from a position of 0 degree of a blade portion described in Patent document 1 proposes a solution to the above problem.

[Prior art document]

[Patent document]

[Patent document 1] Japanese Patent No. 4951788 Official Gazette.

[Disclosure of invention]

[Problems to be solved by invention]

The drill head of the invention described in Patent document 1 uses the third guide portion to eliminate an unstable state of a behavior of the drill head and eliminate deformation or displacement occurring periodically, thereby providing a suitable state of an inner peripheral surface of a processed hole and improving processing accuracy and work efficiency of the entire boring processing.

However, since the arrangement position of the third guide portion was limited to a predetermined range on the delay side of the second guide portion in the direction of the rotation, there has been a room for improvement with regard to a wider range of applications.

The present invention provides a guide portion arrangement structure and a guide portion arrangement method for arranging the third guide portion of the drill head described in Patent document 1 at a suitable and novel position with a higher degree of freedom where the effect can be exerted stably, whereby orientation of the drill head and straight movement action of a tip during cutting are stabilized and maintained and whereby a suitable surface state on an inner periphery of a processed hole is provided.

[Means for solving problems]

The inventors of the present invention enthusiastically conducted studies to solve the above problem and conceived of following aspects of the present invention.

That is, according to a first aspect of the present invention, in a guide portion arrangement structure of a drill head used for cutting work while being supplied with cutting oil, the guide portion contacting an inner surface of a hole of a work piece at an outer periphery of the drill head and receiving a cutting force of a blade portion while maintaining a clearance for passing the cutting oil therethrough, the guide portion includes three guide portions arranged on the outer periphery of the drill head. The three guide portions include a first guide portion, a second guide portion and a third guide portion. The first guide portion has a portion that is farthest in a radial direction from the center of rotation of the drill head and that is positioned in an angular range of 80 degrees to 100 degrees on a delay side of the blade portion in the direction of the rotation, the second guide portion has a portion that is farthest in the radial direction from the center of rotation of the drill head and that is positioned in an angular range of 170 degrees to 190 degrees on the delay side of the blade portion in the direction of the rotation, and the third guide portion has a portion that is farthest in the radial direction from the center of the rotation of the drill head and that is positioned in at least one of an angular range of 1 degree to 34 degrees, an angular range of 146 degrees to 179 degrees and an angular range of 326 degrees to 359 degrees on the delay side of the blade portion in the direction of the rotation respectively when a position of a cutting edge of the blade portion is at 0 degree.

[Effect of invention]

The guide portion arrangement structure of the drill head for cutting work having the above construction has the two guide portions of the first and second guide portions, which receive the force components of the force applied to the blade portion of the drill head respectively, and also has the third guide portion for significantly suppressing the instability of the tools (i.e., drill head and boring bar), the third guide portion being arranged in any of the above-described three suitable angular ranges. Thus, fluctuation of displacement, which can lead to self-excited vibration of the tools during the processing, is restricted by the three guide portions including the third guide portion, whereby straight cutting action of the entire tools is maintained in a stable state, and processing accuracy is improved. Thus, a flawless and fair surface state can be provided without forming a cross-section of the processed hole in the shape of a polygon and without generating the rifling mark and the like on the inner surface of the hole. As a result, no additional work or finishing work is necessary and advantages are provided with regard to labor hour and cost.

According to a second aspect of the present invention, in a guide portion arrangement structure of a drill head used for cutting work while being supplied with cutting oil, the guide portion contacting an inner surface of a hole of a work piece at an outer periphery of the drill head and receiving a cutting force of a blade portion while maintaining a clearance for passing the cutting oil therethrough, the guide portion includes a first guide portion receiving a tangential component of the cutting force of the blade portion, a second guide portion receiving a radial component of the cutting force and a third guide portion. The first to third guide portions are arranged on an outer periphery of the drill head. The second guide portion is arranged such that a portion of the second guide portion that is farthest in the radial direction from the center of rotation of the drill head is positioned in an angular range of 170 degrees to 190 degrees on the delay side of the blade portion in the direction of the rotation when a position of a cutting edge of the blade portion is at 0 degree. The third guide portion is arranged such that a portion of the third guide portion that is farthest in the radial direction from the center of the rotation of the drill head is positioned in at least one of an angular range of 1 degree to 34 degrees, an angular range of 146 degrees to 179 degrees and an angular range of 326 degrees to 359 degrees on the delay side of the blade portion in the direction of the rotation when the position of the cutting edge of the blade portion is at 0 degree. The above mentioned guide portion arrangement structure of the drill head for cutting work provides effects similar to those of the first aspect.

According to a third aspect of the present invention, in the guide portion arrangement structure of the drill head for cutting work according to the first or second aspect, the third guide portion is arranged such that the portion of the third guide portion that is farthest in the radial direction from the center of rotation of the drill head is positioned in an angular range of 25 degree to 29 degrees on the delay side of the blade portion in the direction of the rotation when the position of the cutting edge of the blade portion is at 0 degree.

With the guide portion arrangement structure of the drill head for cutting work having the above construction, the third guide portion is arranged in the angular range where the unstable state can be suppressed for a polygon that has a large realistic influence accompanying the pattern formation among the patterns of the polygonal cross-sectional shapes of the hole such as the rifling mark, generation of which is anticipated during the cutting work. Thus, the three guide portions can surely suppress the unstable state, which can lead to the formation of the pattern of the cross-sectional shape of the polygon having the number of corners, which is apt to occur realistically. Thus, highly precise boring processing can be performed without forming the rifling mark and the like.

According to a fourth aspect of the present invention, an arrangement method of a guide portion of a drill head used for cutting work while being supplied with cutting oil, the guide portion contacting an inner surface of a hole of a work piece at an outer periphery of the drill head and receiving a cutting force of a blade portion while maintaining a clearance for passing the cutting oil therethrough, includes arranging first to third guide portions on an outer periphery of the drill head as the guide portion, assuming that the first guide portion is arranged such that a portion of the first guide portion that is farthest in a radial direction from the center of rotation of the drill head is positioned in an angular range of 80 degrees to 100 degrees on a delay side of the blade portion in the direction of the rotation when a position of a cutting edge of the blade portion is at 0 degree, assuming that the second guide portion is arranged such that a portion of the second guide portion that is farthest in the radial direction from the center of the rotation of the drill head is positioned in an angular range of 170 degrees to 190 degrees on the delay side of the blade portion in the direction of the rotation when the position of the cutting edge of the blade portion is at 0 degree, assuming that the third guide portion is arranged such that a portion of the third guide portion that is farthest in the radial direction from the center of the rotation of the drill head is positioned in at least one of an angular range of 1 degree to 89 degrees, an angular range of 91 degrees to 179 degrees and an angular range of 271 degrees to 359 degrees on the delay side of the blade portion in the direction of the rotation when the position of the cutting edge of the blade portion is at 0 degree, providing equations of motion concerning changes of displacement of a boring bar attached with the drill head from a stationary cutting state respectively while changing the value of the arrangement angle ($\alpha_3$) of the third guide portion in the aforementioned angular ranges, obtaining a characteristic equation based on the equations of motion, obtaining a characteristic root $s=\sigma+jN$ of the characteristic equation in a case where an imaginary part N is close to each of integer values equal to or smaller than a predetermined number, obtaining a range of the angle ($\alpha_3$), in which the maximum value of the real part $\sigma$ obtained is invariably negative for any N, and setting the arrangement angle of the third guide portion such that the portion of the third guide portion farthest in the radial direction from the center of the rotation of the drill head is positioned in the obtained range of the angle ($\alpha_3$).

With the guide portion arrangement method of the drill head for cutting work having the above construction, generation of the rifling mark and the like during the cutting work is comprehended as a pattern formation phenomenon in a time delay system, and stability of the system is determined by analyzing the displacement fluctuation of the processing tools. The third guide portion is arranged at the angular position, where the real part $\sigma$ of the characteristic root takes a negative value and it can be determined that the stability is provided. Thus, the tools can be inhibited by the three guide portions from becoming unstable during the cutting work, and formation of the rifling mark and the like can be suppressed. Thus, the processing accuracy can be improved. Additional work and finishing work become unnecessary and advantages are provided with regard to labor hour and cost.

According to a fifth aspect of the present invention, an arrangement method of a guide portion of a drill head used for cutting work while being supplied with cutting oil, the guide portion contacting an inner surface of a hole of a work piece at an outer periphery of the drill head and receiving a cutting force of a blade portion while maintaining a clearance for passing the cutting oil therethrough, includes arranging a first guide portion receiving a tangential component of the cutting force of the blade portion, a second guide portion receiving a radial component of the cutting force and a third guide portion, the first to third guide portions being arranged on an outer periphery of the drill head as the guide portion, assuming that the second guide portion is arranged such that a portion of the second guide portion that is farthest in the radial direction from the center of rotation of the drill head is positioned in an angular range of 170 degrees to 190 degrees on the delay side of the blade portion in the direction of the rotation when a position of a cutting edge of the blade portion is at 0 degree, assuming that the third guide portion is arranged such that a portion of the third guide portion that is farthest in the radial direction from the center of rotation of the drill head is positioned in at least one of an angular range of 1 degree to 89 degrees, an angular range of 91 degrees to 179 degrees and an angular range of 271 degrees to 359 degrees on the delay side of the blade portion in the direction of the rotation when the position of the cutting edge of the blade portion is at 0 degree, providing equations of motion concerning changes of displacement of a boring bar attached with the drill head from a stationary cutting state respectively while changing the value of the arrangement angle ($\alpha_3$) of the third guide portion in the aforementioned angular ranges, obtaining a characteristic equation based on the equations of motion, obtaining a characteristic root $s=\sigma+jN$ of the characteristic equation in a case where an imaginary part N is close to each of integer values equal to or smaller than a predetermined number, obtaining a range of the angle ($\alpha_3$), in which the maximum value of the real part $\sigma$ obtained is invariably negative for any N, and setting the arrangement angle of the third guide portion such that the portion of the third guide portion farthest in the radial direction from the center of the rotation of the drill head is positioned in the obtained range of the angle ($\alpha_3$).

The above-mentioned guide portion arrangement method of the drill head for cutting work provides effects similar to those of the fourth aspect.

[Brief explanation of drawings]

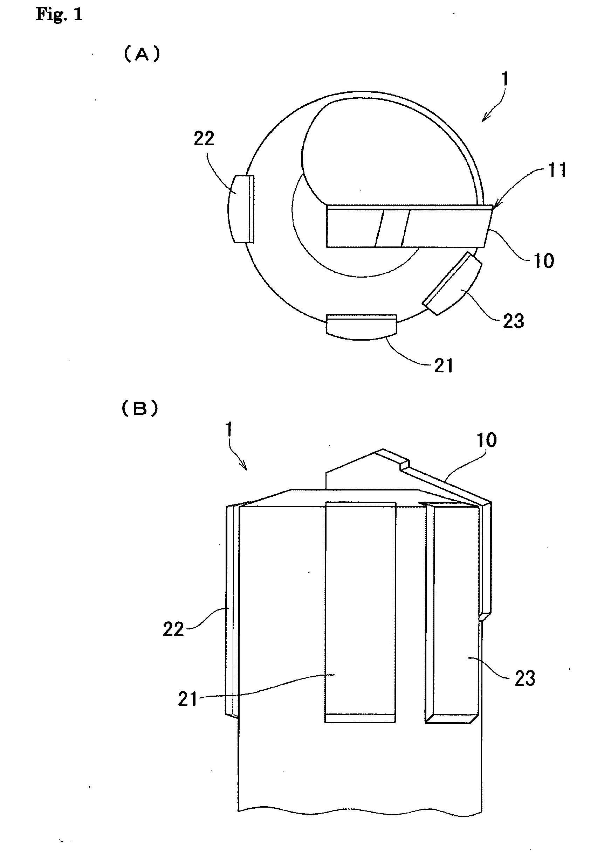

Fig. 1 is a schematic construction diagram showing a drill head using a guide portion arrangement structure according to a first embodiment of the present invention.

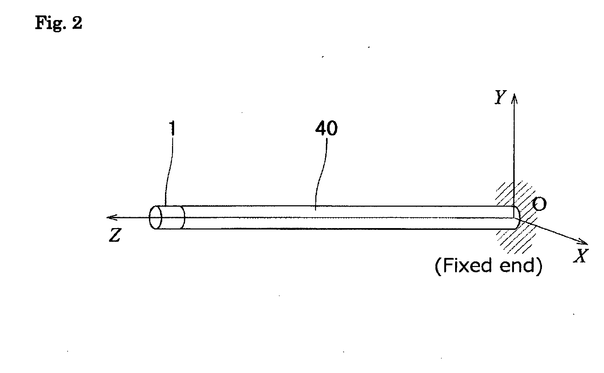

Fig. 2 is a schematic diagram showing a drill head and a boring bar modeled with the guide portion arrangement structure according to the first embodiment of the present invention.

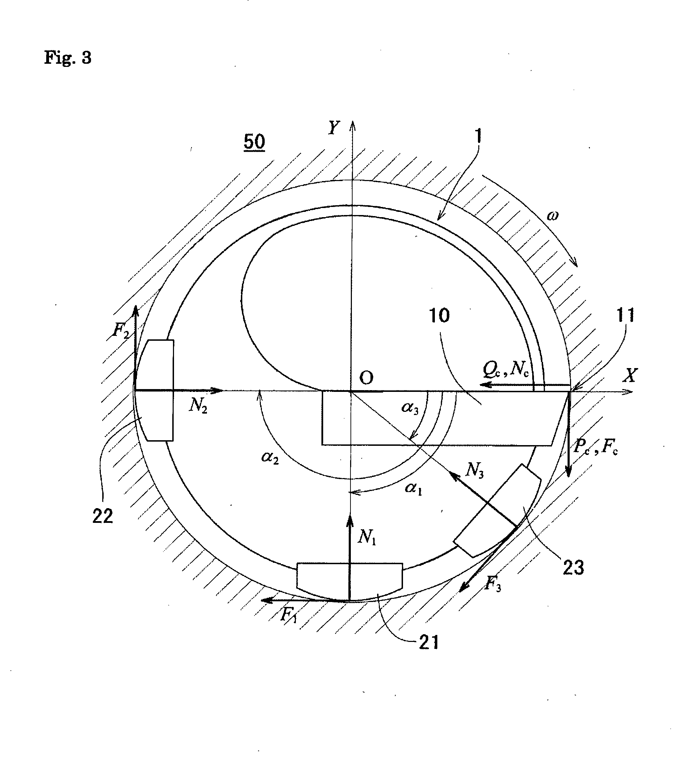

Fig. 3 is a schematic diagram showing a guide portion arrangement structure according to the first embodiment of the present invention.

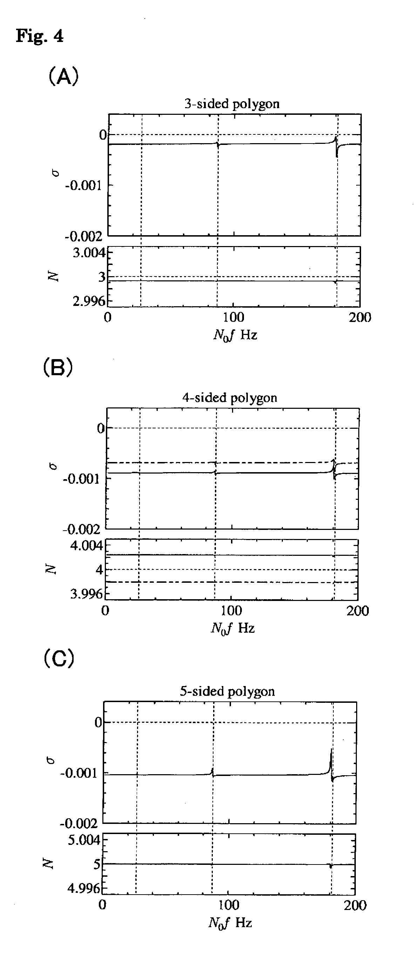

Fig. 4 is a diagram illustrating changes of a real part and an imaginary part of a characteristic root from the proximity of a triangle (3-sided polygon) to the proximity of a pentagon (5-sided polygon) in an analysis result of the guide portion arrangement structure according to the first embodiment of the present invention.

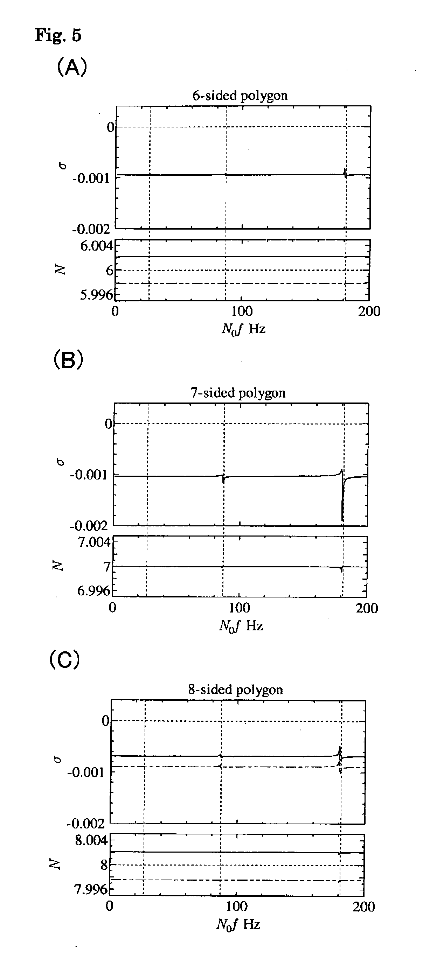

Fig. 5 is a diagram illustrating changes of a real part and an imaginary part of a characteristic root from the proximity of a hexagon (6-sided polygon) to the proximity of an octagon (8-sided polygon) in the analysis result of the guide portion arrangement structure according to the first embodiment of the present invention.

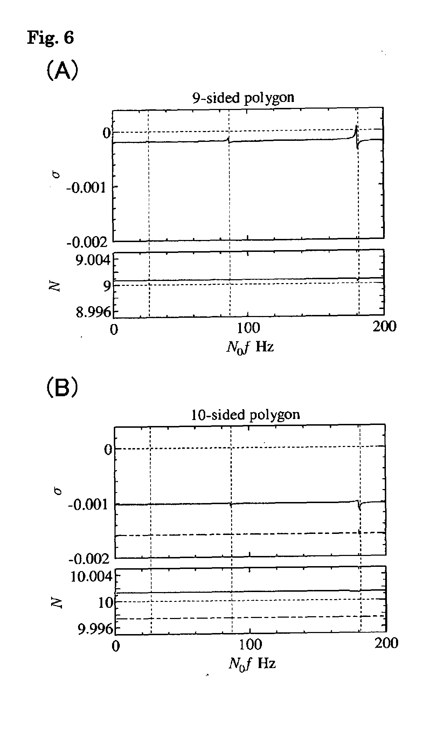

Fig. 6 is a diagram illustrating changes of a real part and an imaginary part of a characteristic root at the proximity of a nonagon (9-sided polygon) and the proximity of a decagon (10-sided polygon) in the analysis result of the guide portion arrangement structure according to the first embodiment of the present invention.

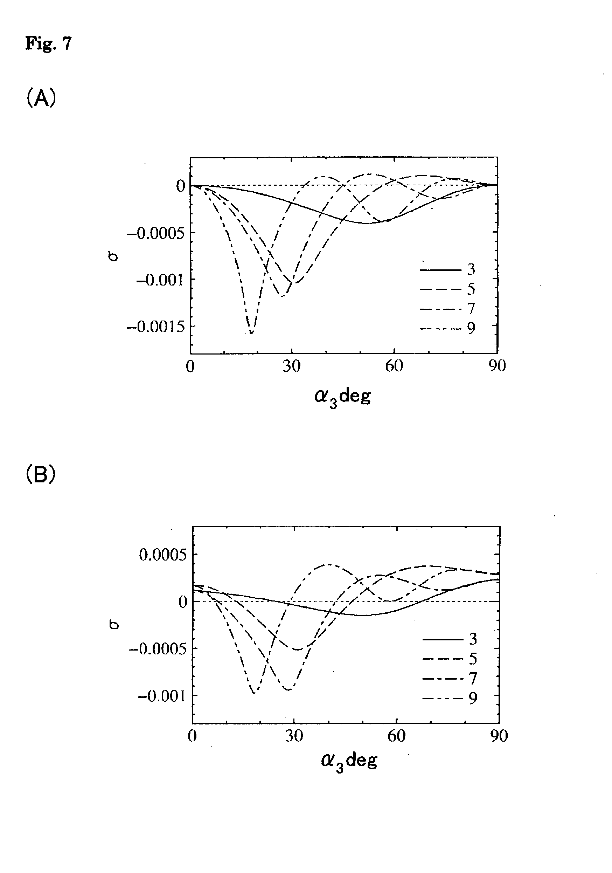

Fig. 7 is a diagram illustrating changes of a value of a real part in a quasi-static process and a maximum value of the real part up to a third order corresponding to each of polygons having respective numbers of corners with respect to an arrangement angle of the third guide portion in the analysis result of the guide portion arrangement structure according to the first embodiment of the present invention.

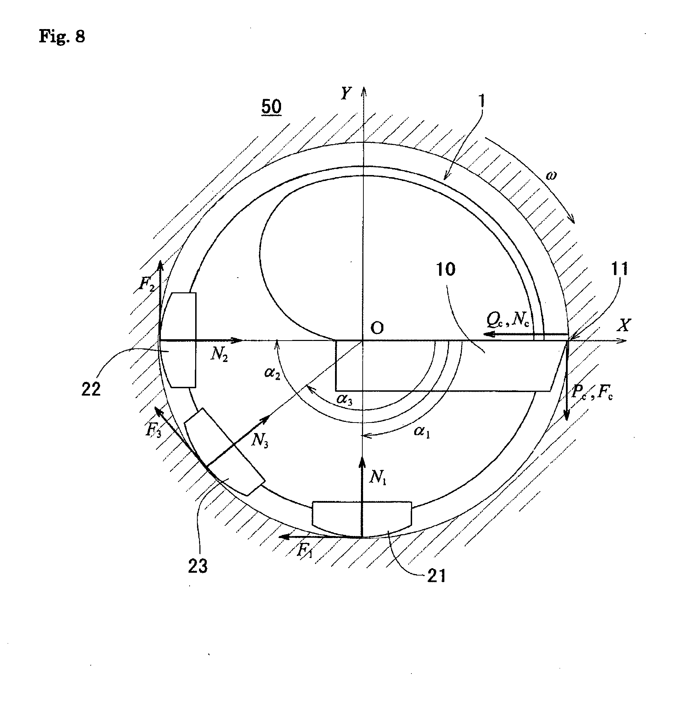

Fig. 8 is a schematic diagram showing a guide portion arrangement structure according to a second embodiment of the present invention.

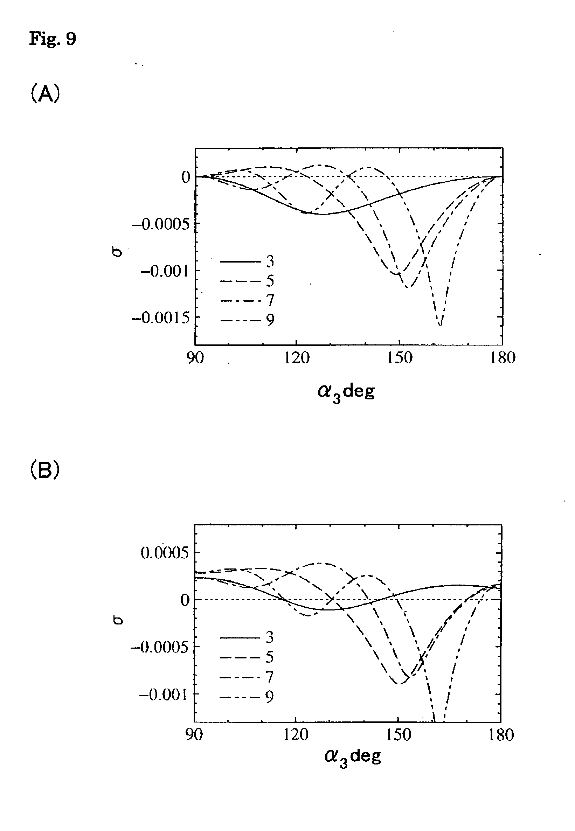

Fig. 9 is a diagram illustrating changes of a value of a real part in a quasi-static process and a maximum value of the real part up to a third order corresponding to each of polygons having respective numbers of corners with respect to an arrangement angle of the third guide portion in an analysis result of the guide portion arrangement structure according to the second embodiment of the present invention.

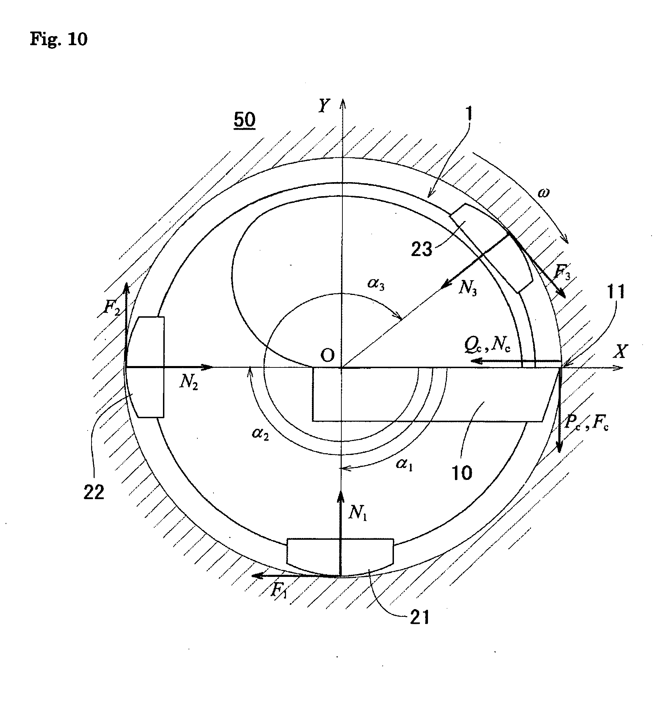

Fig. 10 is a schematic diagram showing a guide portion arrangement structure according to a third embodiment of the present invention.

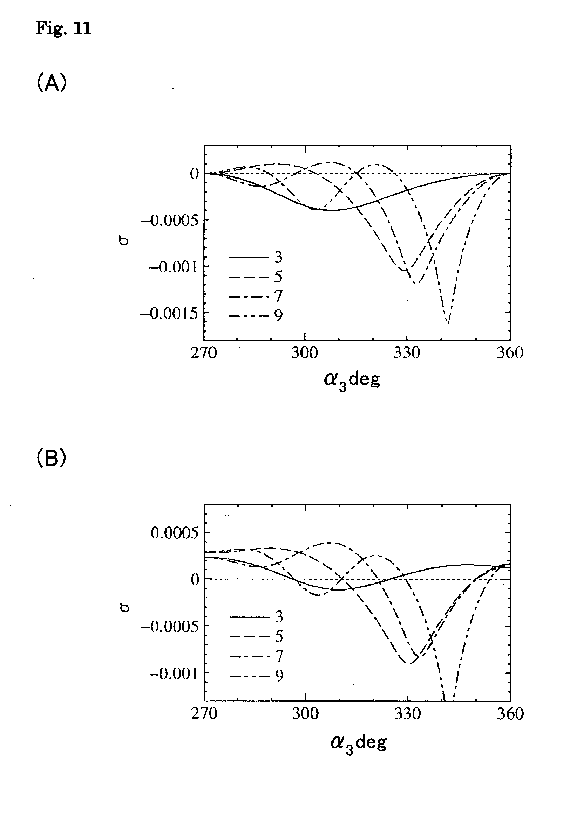

Fig. 11 is a diagram illustrating changes of a value of a real part in a quasi-static process and a maximum value of the real part up to a third order corresponding to each of polygons having respective numbers of corners with respect to an arrangement angle of the third guide portion in an analysis result of the guide portion arrangement structure according to the third embodiment of the present invention.

[Embodiments of invention]

(First embodiment of invention)

Hereinafter, a guide portion arrangement structure of a drill head for cutting work according to a first embodiment of the present invention will be explained with reference to Figs. 1 to 7. Fig. 1 is a schematic construction diagram showing a drill head using a guide portion arrangement structure according to the embodiment. Fig. 2 is a schematic diagram showing a drill head and a boring bar (or boring tube) modeled with the guide portion arrangement structure according to the embodiment. Fig. 3 is a schematic diagram showing a guide portion arrangement structure according to the embodiment. Fig. 4 is a diagram illustrating changes of a real part and an imaginary part of a characteristic root from the proximity of a triangle to the proximity of a pentagon in an analysis result of the guide portion arrangement structure according to the embodiment. Fig. 5 is a diagram illustrating changes of a real part and an imaginary part of a characteristic root from the proximity of a hexagon to the proximity of an octagon in the analysis result of the guide portion arrangement structure according to the embodiment. Fig. 6 is a diagram illustrating changes of a real part and an imaginary part of a characteristic root at the proximity of a nonagon and the proximity of a decagon in an analysis result of the guide portion arrangement structure according to the embodiment. Fig. 7 is a diagram illustrating changes of a value of a real part in a quasi-static process and a maximum value of the real part up to a third order corresponding to each of polygons having respective numbers of corners with respect to an arrangement angle of the third guide portion in an analysis result of the guide portion arrangement structure according to the embodiment.

A guide portion arrangement structure according to the embodiment shown in the drawings is provided such that three guide portions are arranged on an outer periphery of a drill head 1, which is attached to a tip end of a boring bar 40 and which rotates relative to a work piece 50, the guide portions contacting an inner surface of a hole of the work piece 50 at the outer periphery of the drill head 1. When a position of a cutting edge 11 of a blade portion 10 is defined as a position of 0 degree, the structure has a first guide portion 21 and a second guide portion 22 arranged such that positions of portions of the guide portions 21, 22 farthest in a radial direction of the drill head 1 from the center of rotation of the drill head 1 are arranged at positions at predetermined angles from the blade portion 10 on a delay side in the direction of the rotation around the center of the rotation of the drill head 1 respectively. The delay side faces a direction of a reaction force, which the blade portion 10 receives from the work piece 50. The structure further has a third guide portion 23 arranged at a position different from the guide portions 21, 22. The blade portion 10 is a known cutting member, which is arranged to a main body of the drill head 1 in a fixed manner integrally or in a detachable manner and which has the cutting edge 11 at its end. Detailed explanation of the blade portion 10 is omitted here.

Alternatively, the blade portion 10 may be divided into plural pieces. That is, the drill head 1 may be equipped with multiple blade portions such as a peripheral edge, a middle edge, and a central edge.

Regardless of the number (i.e., division number) of the blade portion 10, the "cutting edge" serving as the reference of the position of 0 degree herein means a cutting edge that is positioned near the outer periphery of the drill head 1 and that interferes with and cuts the work piece 50 to form the inner peripheral surface of the hole.

The guide portions 21, 22, 23 are attached to the outer periphery of the main body of the drill head 1 as pads, which contact the inner surface of the hole of the work piece 50 and receive a cutting force of the blade portion 10 while maintaining a clearance for passing cutting oil. An attachment structure of the first and second guide portions 21, 22 to the main body of the drill head 1 is the same as that of a known structure. In this example, assuming that the position of the cutting edge 11 of the blade portion 10 is at 0 degree, the first guide portion 21 is arranged such that a position of a portion of the first guide portion 21 farthest in the radial direction of the drill head 1 from the center of the rotation of the drill head 1 is in an angular range from 80 degrees to 100 degrees on the delay side of the blade portion 10 in the direction of the rotation. On the same assumption, the second guide portion 22 is arranged such that a position of a portion of the second guide portion 22 farthest in the radial direction of the drill head 1 from the center of the rotation of the drill head 1 is in an angular range from 170 degrees to 190 degrees on the delay side of the blade portion 10 in the direction of the rotation. An attachment structure of the third guide portion 23 to the main body of the drill head 1 other than the attachment position is the same as that of the guide portion of the known drill head and detailed explanation thereof is omitted here. The first to third guide portions 21, 22, 23 are arranged to the main body of the drill head 1 in a fixed manner integrally or in a detachable manner.

Assuming that the angular position of the cutting edge 11 is at 0 degree, the third guide portion 23 is arranged such that a position of a portion of the third guide portion 23 farthest in the radial direction of the drill head 1 from the center of the rotation of the drill head 1 is in an angular range from 1 degree to 34 degrees on the delay side of the blade portion 10 in the direction of the rotation. While stability can be secured for polygons each having even number of corners among patterns that can be formed in the shape of polygons each having a predetermined number of corners, patterns that can be formed in the shape of polygons each having odd number of corners cancel each other to suppress instability since the third guide portion 23 exists in the specific range near the blade portion 10 of the drill head 1. It is more preferable that the third guide portion 23 be arranged such that the position of the portion of the guide portion 23 farthest in the radial direction of the drill head 1 from the center of the rotation of the drill head 1 is in an angular range from 25 degrees to 29 degrees on the delay side of the blade portion 10 in the direction of the rotation, in which stability can be obtained as shown by an analysis mentioned later.

Next, an analysis process for illustrating that the guide portion arrangement structure according to the present embodiment has a character to suppress the unstable states such as formation of rifling mark will be explained.

If the rifling mark or the like is formed during the cutting work including the BTA deep hole drilling, the cut hole, which should originally have a round cross-sectional shape, has a polygonal shape. Generation of the rifling mark or the like is a pattern formation phenomenon due to the cutting. Such a phenomenon can be regarded as unstable vibration by time delay, in which the fluctuation during the cutting is fed back after a time through the blade portion 10 and the guide portions 21, 22, 23. The present disclosure includes establishing an analysis model of the phenomenon, obtaining a characteristic root from a characteristic equation of a linear time delay system by numerical analysis, and determining stability of the system. Thus, positional relationships among the guide portions 21, 22, 23, which can suppress the unstable vibration, are examined.

First, modeling that assumes the boring bar 40 attached with the drill head 1 as a beam will be explained. Fig. 2 is a schematic diagram. The boring bar 40 attached with the drill head 1 is modeled as a beam with length L having the drill head as a mass point attached to a tip thereof by using a beginning end of the boring bar as an origin, providing the Z-axis along the boring bar, providing the X-axis in a horizontal direction, and providing the Y-axis in a vertical direction. As assumptions in this model, the beginning end (Z= 0) of the boring bar is defined as a fixed end. Only the mass m of the drill head and an external force received from the work piece are taken into consideration and bending moment is ignored at the termination end (Z=L). Torsional moment is not taken into consideration.

Forces acting on the parts of the tools are shown in Fig. 3. It is assumed that the cutting with the tools is performed in a state where the work piece 50 has a prepared hole. It is assumed that the work piece rotates clockwise during the cutting. A rotation period T=2n/o is provided at predetermined rotation speed ω. It is assumed regarding the cutting that the cutting edge of the blade portion and the pad serving as the guide portion each has width in a longitudinal direction and therefore they contact the same positions of the work piece repeatedly over the ranges of the widths. However, it is also assumed that the cutting is performed only with the portion of the cutting edge that contacts the work piece for the first time and the cutting is not performed where the cutting edge contacts the work piece thereafter. At the blade portion, a tangential component $P_c$ and a radial component $Q_c=bP_c$ act as cutting forces, which are proportional to a cutting area. At a portion where the blade portion contacts the work piece in or after the second round, a normal force (normal component of reaction) $N_c$ and a frictional force $F_c=\mu_cN_c$ act.

A clockwise angle of each guide portion from the X-axis (cutting edge position) is denoted with $\alpha_i$ (i= 1, 2, 3, ...). The cutting is not performed at the guide portions. Line contact (or point contact when observed on XY plane) occurs between each of the guide portions and the work piece, and a normal force (normal component of reaction) Ni and a frictional force $F_i=\mu_iN_i$ act. Characteristic of the normal force is modeled with a linear spring, and the frictional force is assumed to be a coulomb friction. Influences of the blade portion and the guide portions are taken into consideration for following $n_c$ rotations and $n_i$ rotations respectively. Influence of the gravity over the cutting is not taken into consideration.

Equations of motion established about the changes of the displacement of the modeled boring bar in the directions of the respective axes from a constant cutting state, the changes being denoted with x, y respectively, in consideration of the above assumptions are equations of motion of bending of a beam. Therefore, the equations can be expressed as follows by using a longitudinal elastic modulus E, a viscous damping coefficient c, density p, moment of inertia of area I, and a cross-sectional area A of the bar.

[Formula 1]

$$\rho A\ddot{x}(Z,t)+c\dot{x}(Z,t)+EIx''''(Z,t)=0$$
$$\rho A\ddot{y}(Z,t)+c\dot{y}(Z,t)+EIy''''(Z,t)=0 \qquad (1)$$

Since the beginning end is the fixed end and the bending moment at the tip is 0, boundary conditions are expressed as follows by using the external forces $F_X$, $F_Y$ in the directions of the respective axes acting on the tools. The change of the force in each direction is expressed by attaching "^" above the symbol.

[Formula 2]

$$x(0,t)=y(0,t)=0 \;,\; x'(0,t)=y'(0,t)=0$$
$$x''(L,t)=y''(L,t)=0$$
$$m\ddot{x}(L,t)=EIx'''(L,t)+\hat{F}_X(t)$$
$$m\ddot{y}(L,t)=EIy'''(L,t)+\hat{F}_Y(t) \qquad (2)$$

The change of the cutting area can be expressed as $\delta \cdot x(L, t)$ using a feed $\delta$ per rotation. Changes of the tangential component and the radial component can be expressed as follows by using the cutting force $K_c$ per unit area (specific cutting resistance). It is assumed that a ratio of the radial component to the tangential component is b.

[Formula 3]

$$\hat{P}_c(t)=K_c\delta\bullet x(L,t) \;,\; \hat{Q}_c(t)=b\hat{P}_c(t) \qquad (3)$$

Changes of the normal force and the frictional force at the point where the blade portion contacts the work piece in or after the second round can be expressed as follows by taking into consideration the contacts occurring until the rotation $n_c$ as the influence of the blade and by using a spring constant $k_c$ per unit feed length at the contact between the blade and the work piece, a dynamic friction coefficient $\mu_c$, and the rotation period 1.

[Formula 4]

$$\hat{N}_c(t)=k_c\delta\sum_{l=1}^{n_c}\{x(L,t)-x(L,t-lT)\} \;,\; \hat{F}_c(t)=\mu_c\hat{N}_c(t) \qquad (4)$$

The change $r_i$ of radial displacement of the predetermined guide portion i can be expressed as follows.

$$r_i(t) = x(L, t)\cos\alpha_i - y(L, t)\sin\alpha_i \qquad (5)$$

Therefore, by taking into consideration the contacts occurring until the rotation $n_i$ as the influence of the guide portion and by using a spring constant $k_i$ per unit length at the contact between the guide portion and the work piece and a dynamic friction coefficient $\mu_i$, the changes of the normal force and the frictional force at the point where the guide portion contacts the work piece can be expressed as follows.

[Formula 5]

$$\hat{N}_i(t) = k_i \delta \sum_{l=0}^{n_i-1} \left[ x(L,t)\cos\alpha_i - y(L,t)\sin\alpha_i - x(L, t-(\alpha_i/2\pi+l)T) \right]$$

$$\hat{F}_i(t) = \mu_i \hat{N}_i(t)$$

(6)

The changes of the external forces in the directions of the X, Y axes acting on the tools can be expressed as follows by using the above formulae.

[Formula 6]

$$\hat{F}_X(t) = -b\hat{P}_c(t) - \hat{N}_c(t) - \sum_{i=1}^{3} \hat{N}_i(t)(\cos\alpha_i + \mu_i\sin\alpha_i)$$

$$\hat{F}_Y(t) = -\hat{P}_c(t) - \mu_c\hat{N}_c(t) + \sum_{i=1}^{3} \hat{N}_i(t)(\cos\alpha_i - \mu_i\sin\alpha_i)$$

(7)

Above Formulae (4) and (6) indicate that the portion cut until the previous round serves as relative displacement, which is fed back as a term of time delay until the rotations $n_c$, $n_i$, exhibiting characters of the pattern formation phenomenon.

Next, a process for obtaining a characteristic equation via an eigenvalue analysis of the above-mentioned equations of motion will be explained.

Following equations are obtained by applying variable transformation $\tau=\omega t$ to the equations of motion. Dots on x, y in the following formulae express differentiation of $\tau$.

[Formula 7]

$$\rho A\omega^2 \ddot{x}(Z,\tau) + c\omega\dot{x}(Z,\tau) + EIx''''(Z,\tau) = 0$$

$$\rho A\omega^2 \ddot{y}(Z,\tau) + c\omega\dot{y}(Z,\tau) + EIy''''(Z,\tau) = 0$$

(8)

Furthermore, following formulae are obtained by applying Laplace transformation about $\tau$ to the above formulae by setting an initial value at 0. "~" above the symbol in expressions hereinafter means Laplace transformation of the changes, and s is a Laplace transformation variable.

[Formula 8]

$$\rho A\omega^2 s^2 \tilde{X}(Z,s) + c\omega s\tilde{X}(Z,s) + EI\tilde{X}''''(Z,s) = 0$$

$$\rho A\omega^2 s^2 \tilde{Y}(Z,s) + c\omega s\tilde{Y}(Z,s) + EI\tilde{Y}''''(Z,s) = 0$$

(9)

Laplace transformations of the changes of displacement of X, Y have an equal characteristic exponent about Z, and a following expression can be provided with $\lambda(s)$, which is the characteristic exponent about Z.

$$\rho A\omega^2 s^2 + c\omega s + EI\lambda(s)^4 = 0$$

(10)

Thus, the characteristic exponent $\lambda(s)$ can be expressed as follows.

[Formula 9]

$$\lambda(s) = \pm\beta(s), \pm j\beta(s) \qquad (j = \sqrt{-1})$$

$$\beta(s) = \sqrt[4]{-\frac{\rho A\omega^2 s^2 + c\omega s}{EI}} \tag{11}$$

Therefore, following formulae can be obtained.
[Formula 10]

$$\tilde{X}(Z,s) = C_1^X e^{\beta(s)Z} + C_2^X e^{-\beta(s)Z} + C_3^X e^{j\beta(s)Z} + C_4^X e^{-j\beta(s)Z}$$

$$\tilde{Y}(Z,s) = C_1^Y e^{\beta(s)Z} + C_2^Y e^{-\beta(s)Z} + C_3^Y e^{j\beta(s)Z} + C_4^Y e^{-j\beta(s)Z} \tag{12}$$

As for the boundary conditions, by performing the transformation of the variable and the Laplace transformation, following equations can be obtained.
[Formula 11]

$$\tilde{X}(0,s) = \tilde{Y}(0,s) = 0 \ , \ \tilde{X}'(0,s) = \tilde{Y}'(0,s) = 0$$

$$\tilde{X}''(L,s) = \tilde{Y}''(L,s) = 0$$

$$m\omega^2 s^2 \tilde{X}(L,s) = EI\tilde{X}'''(L,s) + \tilde{F}_X(s)$$

$$m\omega^2 s^2 \tilde{Y}(L,s) = EI\tilde{Y}'''(L,s) + \tilde{F}_Y(s) \tag{13}$$

Here,
[0059] [Formula 12]

$$\tilde{F}_X(s) = -b\tilde{P}_c(s) - \tilde{N}_c(s) - \sum_{i=1}^{3} \tilde{N}_i(s)(\cos\alpha_i + \mu_i \sin\alpha_i)$$

$$\tilde{F}_Y(s) = -\tilde{P}_c(s) - \mu_c\tilde{N}_c(s) + \sum_{i=1}^{3} \tilde{N}_i(s)(\sin\alpha_i - \mu_i \cos\alpha_i) \tag{14}$$

And,
[0060] [Formula 13]

$$\tilde{P}_c(s) = K_c\delta \cdot \tilde{X}(L,s)$$

$$\tilde{N}_c(s) = k_c\delta\tilde{X}(L,s)\{n_c - D_c(s)\}$$

$$\tilde{N}_i(s) = k_i\delta\left[\tilde{X}(L,s)\{n_i\cos\alpha_i - D_i(s)\} - n_i\tilde{Y}(L,s)\sin\alpha_i\right] \tag{15}$$

$$D_c(s) = \sum_{l=1}^{n_c} e^{-2\pi ls} = e^{-2\pi s}\frac{1 - e^{-2\pi n_c s}}{1 - e^{-2\pi s}}$$

$$D_i(s) = \sum_{l=0}^{n_i-1} e^{-(\alpha_i + 2\pi l)s} = e^{-\alpha_i s}\frac{1 - e^{-2\pi n_i s}}{1 - e^{-2\pi s}}$$

From the above, following equations can be obtained.
[Formula 14]

$$C_1{}^X + C_2{}^X + C_3{}^X + C_4{}^X = 0$$

$$C_1{}^Y + C_2{}^Y + C_3{}^Y + C_4{}^Y = 0$$

$$\beta(s)C_1{}^X - \beta(s)C_2{}^X + j\beta(s)C_3{}^X - j\beta(s)C_4{}^X = 0$$

$$\beta(s)C_1{}^Y - \beta(s)C_2{}^Y + j\beta(s)C_3{}^Y - j\beta(s)C_4{}^Y = 0$$

$$\beta(s)^2 e^{\beta(s)L}C_1{}^X + \beta(s)^2 e^{-\beta(s)L}C_2{}^X - \beta(s)^2 e^{j\beta(s)L}C_3{}^X - \beta(s)^2 e^{-j\beta(s)L}C_4{}^X = 0$$

$$\beta(s)^2 e^{\beta(s)L}C_1{}^Y + \beta(s)^2 e^{-\beta(s)L}C_2{}^Y - \beta(s)^2 e^{j\beta(s)L}C_3{}^Y - \beta(s)^2 e^{-j\beta(s)L}C_4{}^Y = 0$$

$$\left[\gamma_{11}(s) - EI\beta(s)^3\right]e^{\beta(s)L}C_1{}^X + \left[\gamma_{11}(s) + EI\beta(s)^3\right]e^{-\beta(s)L}C_2{}^X \tag{16}$$

$$+ \left[\gamma_{11}(s) + jEI\beta(s)^3\right]e^{j\beta(s)L}C_3{}^X + \left[\gamma_{11}(s) - jEI\beta(s)^3\right]e^{-j\beta(s)L}C_4{}^X$$

$$+ \gamma_{12}(s)e^{\beta(s)L}C_1{}^Y + \gamma_{12}(s)e^{-\beta(s)L}C_2{}^Y + \gamma_{12}(s)e^{j\beta(s)L}C_3{}^Y + \gamma_{12}(s)e^{-j\beta(s)L}C_4{}^Y = 0$$

$$\left[\gamma_{22}(s) - EI\beta(s)^3\right]e^{\beta(s)L}C_1{}^Y + \left[\gamma_{22}(s) + EI\beta(s)^3\right]e^{-\beta(s)L}C_2{}^Y$$

$$+ \left[\gamma_{22}(s) + jEI\beta(s)^3\right]e^{j\beta(s)L}C_3{}^Y + \left[\gamma_{22}(s) - jEI\beta(s)^3\right]e^{-j\beta(s)L}C_4{}^Y$$

$$+ \gamma_{21}(s)e^{\beta(s)L}C_1{}^X + \gamma_{21}(s)e^{-\beta(s)L}C_2{}^X + \gamma_{21}(s)e^{j\beta(s)L}C_3{}^X + \gamma_{21}(s)e^{-j\beta(s)L}C_4{}^X = 0$$

Here,

[Formula 15]

$$\gamma_{11}(s) = m\omega^2 s^2 + bK_c\delta + k_c\delta\{n_c - D_c(s)\} + \sum_{i=1}^{3} k_i\delta\{n_i\cos\alpha_i - D_i(s)\}(\cos\alpha_i + \mu_i\sin\alpha_i)$$

$$\gamma_{12}(s) = -\sum_{i=1}^{3} k_i\delta n_i\sin\alpha_i(\cos\alpha_i + \mu_i\sin\alpha_i) \tag{17}$$

$$\gamma_{21}(s) = K_c\delta + \mu_c k_c\delta\{n_c - D_c(s)\} - \sum_{i=1}^{3} k_i\delta\{n_i\cos\alpha_i - D_i(s)\}(\sin\alpha_i - \mu_i\cos\alpha_i)$$

$$\gamma_{22}(s) = m\omega^2 s^2 + \sum_{i=1}^{3} k_i\delta n_i\sin\alpha_i(\sin\alpha_i - \mu_i\cos\alpha_i)$$

Following matrix expression can be provided from the above formulae.

[Formula 16]

$$A(s)[C_1^X\ C_2^X\ C_3^X\ C_4^X\ C_1^Y\ C_2^Y\ C_3^Y\ C_4^Y]^T = \mathbf{0} \tag{18}$$

A matrix A(s) satisfying the above can be obtained.

Thus, following characteristic equation can be obtained.

[Formula 17]

$$\det\left[A(s)\right] = 0 \tag{19}$$

Its characteristic root s can be expressed with a following formula.

$$s = \sigma + jN \tag{20}$$

Stability of the system can be determined by obtaining the characteristic root s. That is, the real part $\sigma$ of the characteristic root s satisfying the characteristic equation serves as a value that indicates instability of the pattern formation phenomenon. Uniform cutting becomes unstable if there is at least one real part $\sigma$ that is positive among the characteristic roots. In contrast, if all of the real parts $\sigma$ of the characteristic root are negative, the system is stable and the pattern is not formed. Since variable transformation $\tau=\omega t$ has been applied, if the imaginary part N of the characteristic root is retransformed, it becomes $N\omega$. The imaginary part of the characteristic root corresponds to the frequency of the generated vibration (i.e., number of vibration per rotation). When the rotation speed of the tools is $\omega$, the generated frequency is N times higher than the rotation speed $\omega$. Therefore, N corresponds to the number of the corners of the polygon of the pattern of the formed polygonal section. It is considered that the number of the corners deviates from an integer value and the deviation grows with the cutting, thereby generating the rifling mark in the deep hole drilling.

A positional relationship of guide portions in a conventional drill head is that an angle $\alpha_1$ of a first guide portion is in a range from 80 degrees to 100 degrees and an angle $\alpha_2$ of a second guide portion is in a range from 170 degrees to 190 degrees. In this case, however, the system cannot be stabilized thoroughly and a rifling mark can be formed. Therefore, in the present embodiment, three guide portions are used and positions of the guide portions, at which the real part becomes negative for all polygons with any number of corners that should be considered, are found.

More specifically, the case of the two guide portions is used as a basis and the angle $\alpha_1$=90 degrees and the angle $\alpha_2$= 180 degrees of the two guide portions are fixed. Thus, an analysis is performed by changing the angle $\alpha_3$ of the third guide portion in a range from 1 degree to 89 degrees to find a stable guide position.

In the analysis, the value of the angle $\alpha_3$ of the third guide portion is changed in the possible angular range from 1 degree to 89 degrees and equations of motion are set for each of the values. From the equations, a characteristic equation is obtained as mentioned above, and the characteristic equation is solved numerically to obtain a characteristic root. A value of the real part $\sigma$ that changes in accordance with the change of the tool rotation speed in the case where the imaginary part N of the characteristic root is around an integer value (i.e., number of corners of polygon) is calculated, and the maximum value of the real part $\sigma$ for each N is obtained. The stability of the system is determined by determining whether the value $\sigma$ is positive or negative. The imaginary part N deviating largely from the integer value is unrealistic from the viewpoint of comparison with the rifling mark that actually arises. Therefore, it is enough if only the values in the ranges close to the integer values are taken into consideration.

Basic analysis conditions used for the numerical analysis are shown in following Table 1.

[Table 1]

| $m$ (kg) | $L$ (m) | $E$ (N/m$^2$) | $\rho$ (kg/m$^3$) | $I$ (m$^4$) |
|---|---|---|---|---|
| $58.1 \times 10^{-3}$ | 1.58 | $2.00 \times 10^{11}$ | $7.80 \times 10^3$ | $3.91 \times 10^{-4}$ |
| $A$ (m$^2$) | $\delta$ (m/rev) | $K_c$ (N/m$^2$) | $k_c, k_i$ (N/m$^2$) | $c$ (N/m$^2\cdot$s$^{-1}$) |
| $1.36 \times 10^4$ | $6.70 \times 10^{-5}$ | $1.00 \times 10^9$ | $1.00 \times 10^9$ | 4.0 |
| $n_c$ | $n_i$ | $b$ | $\mu_c$ | $\mu_i$ |
| 150 | 300 | 0.1 | 0.1 | 0.1 |

The cross-sectional area A and the moment of inertia of area I are values calculated from the internal diameter $d_1$=12.0x10$^{-3}$ [m] and the external diameter $d_2$=17.8x10$^{-3}$ [m] of the boring bar. The feed $\delta$ is a value in the case where the work piece is rotated at 15 [Hz] and the tools are fed at 1.0 [mm/s]. The values $n_c$, $n_i$ for considering the time delay are decided based on the fact that length of a lower portion of the blade is 10 [mm] and axial length of the guide portion is 20 [mm] in the actual drill head. As the specific cutting resistance of the cutting edge and the contact stiffness between the cutting edge and the work piece in or after the second round, values set with reference to literatures and previous researches are used. The viscous damping coefficient c is set at a value, at which the damping ratio with respect to the lowest-order natural frequency becomes approximately 1.0%. Therefore, the value c can change depending on conditions. When the stability of the pattern formation is determined, the magnitude of the instability under the condition where the frictional self-excited vibration occurs significantly differs from the magnitude under the other condition. Therefore, the stability determination of the pattern formation cannot be performed under such the condition. In the actual cutting, if the frictional self-excited vibration coexists, there is a case where divergent vibration occurs immediately due to the high degree of the instability. Therefore, it cannot be thought at all that the operation is performed under the condition where the frictional self-excited vibration actually occurs. Therefore, the entire analysis described herein is performed under the condition where the self-excited vibration does not occur.

Polygons approximately up to a decagon are considered because polygons of the rifling mark reported conventionally are a triangle and a pentagon and the guide portion and the work piece do not cause line contact but cause distributed contact in fact. That is, it is considered herein that the rifling mark does not occur and stability is provided entirely if the real part $\sigma$ of the characteristic root (i.e., instability degree) is negative for the polygons approximately up to the decagon. First, an analysis of the case of only two guide portions is tried. The case where the angle $\alpha_1$ of the first guide portion is 90 degrees and the angle $\alpha_2$ of the second guide portion is 180 degrees as in the conventional construction is optimum to suppress the instability. The second guide portion with the angle $\alpha_2$=180 degrees provides stability for the polygons having the even number of corners and has an effect to suppress the pattern formation of the polygons having the even number of corners. However, it was also proved from the analysis that the structure has ranges where instability occurs concerning the polygons having the odd number of corners and that the rifling mark cannot be suppressed completely. It is shown that there is a tendency that the guide portion should be preferably positioned near the angle $\alpha$=30 degrees to reduce the instability as a whole concerning the polygons having the odd number of corners as well as the polygons having the even number of corners. Therefore, as an example of the analysis, a case where the angle $\alpha_3$ of the third guide portion is set at 30 degrees will be explained. The natural frequencies of the tools up to the third order in the respective directions in this case are shown in following Table 2.

[Table 2]

|  | Direction X | Direction Y |
| --- | --- | --- |
| Natural frequency (first order) | 26.69 [Hz] | 26.69 [Hz] |
| Natural frequency (second order) | 86.47 [Hz] | 86.45 [Hz] |
| Natural frequency (third order) | 180.37 [Hz] | 180.28 [Hz] |

Changes of the real part $\sigma$ and the imaginary part N of the characteristic root from the proximity of the triangle to the proximity of the decagon in the case where the rotation speed of the tools is changed in the above state are shown in Figs. 4 to 6. A horizontal axis indicates the product of the rotation number f and the integer value No of the corresponding number of corners of the polygon. An upper part of a vertical axis indicates the real part $\sigma$ and a lower part of the vertical axis indicates the value of the imaginary part N. Longitudinal dotted lines in the drawings indicate the natural frequency corresponding to the mode in the direction X and the natural frequency corresponding to the mode in the direction Y respectively. A transverse dotted line indicates the real part $\sigma$=0 or the imaginary part N=No of the characteristic root.

As for the imaginary part N, attention is paid only to a deviation from the integer value No within a predetermined small range. As for the relationship between the deviation of the imaginary part N from the integer value No and the pitch of the rifling mark in each of the polygons having the respective numbers of corners, there is a tendency that the pitch of the rifling mark reduces as the deviation increases. Too small pitch of the rifling mark is unrealistic. Therefore, it can be said that the imaginary part N deviating largely from the integer value is unrealistic in relation with the rifling mark that actually occurs. Therefore, in the analysis, it is enough to pay attention only to the case where N is close to the integer value and to ignore the solution of N out of the above-mentioned range. The same way of thinking is applied also to the cases of the other guide angles.

It is determined from Figs. 4 to 6 that stability is maintained invariably in the case of the polygons having even number of corners since $\sigma$ is invariably less than 0 ($\sigma$<0) and the second guide portion is positioned to be opposite to the blade portion. As for the polygons with the odd number of corners, the instability lowers in the ranges other than the peaks near the specific frequency for the polygons with any odd number of corners. Specifically, $\sigma$ is invariably less than 0 ($\sigma$<0) and the stability is maintained completely in the cases of the triangle, the pentagon and the heptagon (7-sided polygon) (specifically, significant stability is provided in the cases of pentagon and heptagon). That is, it can be said that the rifling mark of the triangle, the pentagon or the heptagon does not occur at any rotation number under this condition. It is considered that the reason for it is that the interval between the second guide portion and the third guide portion is 150 degrees, which is close to two wavelengths (144 degrees) of the pentagon or the three wavelengths (154 degrees) of the heptagon, and therefore the influences applied to the tools by the pattern are canceled with each other. The maximum value of the real part $\sigma$ is the peak value in the third-order natural frequency for the polygons with any number of corners.

With the procedures similar to the above, equations of motion are set for each value of the angle $\alpha_3$ of the third guide portion 23 while changing the value of the angle $\alpha_3$. A characteristic equation is obtained therefrom and a characteristic root is obtained. A value of the real part $\sigma$ that changes in accordance with the change of the tool rotation number in the case where the imaginary part N of the characteristic root is close to an integer value, which is equal to or smaller than ten, is calculated. A value of the real part $\sigma$ in a quasi-static process and the maximum value of up to the third-order natural frequency are obtained for each N. The value of the real part $\sigma$ in the quasi-static process and the maximum value of up to the third order obtained for the respective possible values of $\alpha_3$ are plotted in Figs. 7(A) and 7(B), in which a horizontal axis indicates the angle $\alpha_3$, for each of polygons having respective numbers of corners. The value $\sigma$ is less than 0 ($\sigma$<0) for all the polygons with the even number of corners and illustration thereof is omitted.

In Fig. 7, the vertical axis indicates the magnitude of the real part $\sigma$ of the characteristic root, and the horizontal axis indicates the angle from 1 degree to 89 degrees, which the third guide portion 23 can take. In the case of polygons with the odd number of corners, the stable angular range, in which the real part $\sigma$ is a negative value for all polygons up to the nonagon, includes a range from 1 degree to 34 degrees about the value in the quasi-static process shown in Fig. 7(A) and includes a range from 25 degrees to 29 degrees about the maximum value of up to the third order shown in Fig. 7(B). All the polygons with the even number of corners provide stability. Therefore, in the case of the guide arrangement according to the embodiment, the instability can be suppressed and the stability can be provided by setting the angle $\alpha_3$ of the third guide portion 23 in the range from 1 degree to 34 degrees or more preferably in the range from 25 degrees to 29 degrees.

Thus, in the guide portion arrangement structure of the drill head for cutting work according to the embodiment, the third guide portion 23 is provided in addition to the two guide portions 21, 22 that receive the force components of the force applied to the blade portion 10 of the drill head 1. Further, the generation of the rifling mark and the like during the cutting work including the deep hole drilling is regarded as the pattern formation phenomenon by the time delay system. Thus, the stability of the system is determined by analyzing the displacement change of the processing tools. The third guide portion is arranged at the angular position, where the real part $\sigma$ of the characteristic root takes a negative value and it can be determined that the stability is provided. The change of the displacement, which can lead to the self-excited vibration of the tools during the process, is suppressed with the three guide portions 21, 22, 23 including the third guide portion 23. Accordingly, the entire tools can be maintained in the state where the tools operate stably to prevent the unstable state where the cross-section of the hole becomes a polygon and to prevent the generation of the rifling mark and the like on the inner surface of the processed hole. Thus, a flawless surface state can be obtained and the processing accuracy can be improved. In addition, additional process and finishing work become unnecessary and advantages are provided with regard to labor-hour and cost.

(Second embodiment of invention)

Next, a guide portion arrangement structure of a drill head for cutting work according to a second embodiment of the present invention will be explained with reference to Figs. 8 and 9.

Fig. 8 is a schematic diagram of a guide portion arrangement structure according to the second embodiment of the present invention. The guide portion arrangement structure according to the present embodiment differs from that of the first embodiment only in the arrangement position of the third guide portion 23. That is, as for the position of the portion farthest in the radial direction of the drill head from the center of the rotation of the drill head, the angle $\alpha_1$ of the first guide portion 21 is set in the range from 80 degrees to 100 degrees, and the angle $\alpha_2$ of the second guide portion 22 is set in the range from 170 degrees to 190 degrees like the first embodiment. Thus, an analysis is performed by changing the angle $\alpha_3$ of the third guide portion 23 in the range from 91 degrees to 179 degrees differently from the first embodiment to find out a stable guide position, and the third guide portion 23 is arranged at the found stable position.

As a concrete example of the analysis, the angle $\alpha_1$=90 degrees of the first guide portion and the angle $\alpha_2$=180 degrees of the second guide portion are fixed, and the angle $\alpha_3$ of the third guide portion is changed in the range from 91 degrees to 179 degrees, whereby the same analysis as the first embodiment is performed to find a stable guide position. The conditions other than the arrangement position of the third guide portion 23 are the same as the first embodiment.

There is a tendency that a guide portion should preferably exist near the angle $\alpha$= 150 degrees in order to lower the degree of the instability on the whole concerning the polygons with the odd number of corners as well as the polygons with the even number of corners.

With the procedures similar to those of the first embodiment, equations of motion are set for each value of the angle $\alpha_3$ of the third guide portion 23 while changing the value of the angle $\alpha_3$. A characteristic equation is obtained therefrom and a characteristic root is obtained. A value of the real part $\sigma$ that changes in accordance with the change of the tool rotation number in the case where the imaginary part N of the characteristic root is close to an integer value, which is equal to or smaller than ten, is calculated. A value of the real part $\sigma$ in the quasi-static process and the maximum value of up to the third-order natural frequency are obtained for each N. The value of the real part $\sigma$ in the quasi-static process and the maximum value of up to the third order obtained for each possible value of $\alpha_3$ are plotted in Figs. 9(A) and 9(B), in which a horizontal axis indicates the angle $\alpha_3$, for each of polygons having respective numbers of corners. The value $\sigma$ is less than 0 ($\sigma<0$) for all the polygons with the even number of corners and illustration thereof is omitted.

In Fig. 9, the vertical axis indicates the magnitude of the real part $\sigma$ of the characteristic root, and the horizontal axis indicates the angle from 91 degrees to 179 degrees, which the third guide portion 23 can take. As shown in Fig. 9(A), concerning the polygons with the odd number of corners, the stable angular range, in which the real part $\sigma$ is a negative value for all the polygons up to the nonagon, includes the range from 146 degrees to 179 degrees. However, in Fig. 9(B), there is no range where the real part $\sigma$ is a negative value for all the polygons up to the nonagon. All the polygons with the even number of corners provide stability. Therefore, in the case of the guide arrangement according to the present embodiment, the instability can be suppressed to a certain degree and the stability can be provided by setting the angle $\alpha_3$ of the guide portion 23 in the range from 146 degrees to 179 degrees.

(Third embodiment of invention)

Next, a guide portion arrangement structure of a drill head for cutting work according to a third embodiment of the present invention will be explained with reference to Figs. 10 and 11.

Fig. 10 is a schematic diagram showing a guide portion arrangement structure according to the third embodiment of the present invention.

The present embodiment differs from the first and second embodiments only in the arrangement position of the third guide portion 23. That is, as for the position of the portion farthest in the radial direction of the drill head from the center of the rotation of the drill head, the angle $\alpha_1$ of the first guide portion 21 is set in the range from 80 degrees to 100 degrees, and the angle $\alpha_2$ of the second guide portion is set in the range from 170 degrees to 190 degrees. Thus, an analysis is performed by changing the angle $\alpha_3$ of the third guide portion in the range from 271 degrees to 359 degrees to find a stable guide position and to arrange the third guide portion there.

As a concrete example of the analysis, while the angle $\alpha_1$=90 degrees of the first guide portion and the angle $\alpha_2$=180 degrees of the second guide portion are fixed, the angle $\alpha_3$ of the third guide portion is changed in the range from 271 degrees to 359 degrees and the same analysis as the above embodiments is performed, thereby finding a stable guide position. The conditions other than the arrangement position of the third guide portion 23 are the same as the first embodiment.

There is a tendency that the guide portion should preferably exist near $\alpha$=330 degrees in order to lower the instability degree as a whole about the polygons with the odd number of corners as well as the polygons with the even number of corners.

With the procedures similar to those of the above embodiments, equations of motion are set for each value of the angle $\alpha_3$ of the third guide portion 23 while changing the value of the angle $\alpha_3$. A characteristic equation is obtained therefrom and a characteristic root is obtained. A value of the real part $\sigma$ that changes in accordance with the change of the tool rotation number in the case where the imaginary part N of the characteristic root is close to an integer value, which is equal to or smaller than ten, is calculated. A value of the real part $\sigma$ in the quasi-static process and the maximum value of up to the third-order natural frequency are obtained for each N. The value $\sigma$ in the quasi-static process and the maximum value of up to the third order obtained for each possible value of $\alpha_3$ are plotted in Figs. 11(A) and 11(B), in which a horizontal axis indicates the angle $\alpha_3$, for each of polygons having respective numbers of corners. The value $\sigma$ is less than 0 ($\sigma$<0) for all the polygons with the even number of corners and illustration thereof is omitted.

In Fig. 11, the vertical axis indicates the magnitude of the real part $\sigma$ of the characteristic root, and the horizontal axis indicates the angle from 271 degrees to 359 degrees, which the third guide portion 23 can take. As shown in Fig. 11(A), concerning the polygons with the odd number of corners, the stable angular range, in which the real part $\sigma$ is a negative value for all the polygons up to the nonagon, includes the range from 326 degrees to 359 degrees. However, in Fig. 11(B), there is no range where the real part $\sigma$ is a negative value for all the polygons up to the nonagon. All the polygons with the even number of corners provide stability. Therefore, in the case of the guide arrangement according to the embodiment, the instability can be suppressed to a certain degree and the stability can be provided by setting the angle $\alpha_3$ of the guide portion 23 in the range from 326 to 359 degrees.

The present invention is not limited to the above explanation of the aspects and the embodiments at all. Various modifications that can be easily conceived by a person skilled in the art without departing from the description of appended claims are included in the present invention.

[Explanation of reference numerals]

| | |
|---|---|
| 1 | Drill head |
| 10 | Blade portion |
| 11 | Cutting edge |
| 21 | First guide portion |
| 22 | Second guide portion |
| 23 | Third guide portion |
| 40 | Boring bar |
| 50 | Work piece |

**Claims**

**1.** A guide portion arrangement structure of a drill head used for cutting work while being supplied with cutting oil, the guide portion contacting an inner surface of a hole of a work piece at an outer periphery of the drill head and receiving a cutting force of a blade portion while maintaining a clearance for passing the cutting oil therethrough, **characterized in that**:

the guide portion includes three guide portions arranged on the outer periphery of the drill head, the three guide portions including a first guide portion, a second guide portion and a third guide portion; and
the first guide portion has a portion that is farthest in a radial direction from the center of rotation of the drill head and that is positioned in an angular range of 80 degrees to 100 degrees on a delay side of the blade portion in the direction of the rotation, the second guide portion has a portion that is farthest in the radial direction from the center of rotation of the drill head and that is positioned in an angular range of 170 degrees to 190 degrees on the delay side of the blade portion in the direction of the rotation, and the third guide portion has a portion that is farthest in the radial direction from the center of the rotation of the drill head and that is positioned in at least one of an angular range of 1 degree to 34 degrees, an angular range of 146 degrees to 179 degrees and an angular range of 326 degrees to 359 degrees on the delay side of the blade portion in the direction of the rotation respectively when a position of a cutting edge of the blade portion is at 0 degree.

2. A guide portion arrangement structure of a drill head used for cutting work while being supplied with cutting oil, the guide portion contacting an inner surface of a hole of a work piece at an outer periphery of the drill head and receiving a cutting force of a blade portion while maintaining a clearance for passing the cutting oil therethrough, **characterized in that**
the guide portion includes a first guide portion receiving a tangential component of the cutting force of the blade portion, a second guide portion receiving a radial component of the cutting force and a third guide portion, the first to third guide portions being arranged on an outer periphery of the drill head;
the second guide portion is arranged such that a portion of the second guide portion that is farthest in the radial direction from the center of rotation of the drill head is positioned in an angular range of 170 degrees to 190 degrees on the delay side of the blade portion in the direction of the rotation when a position of a cutting edge of the blade portion is at 0 degree; and
the third guide portion is arranged such that a portion of the third guide portion that is farthest in the radial direction from the center of the rotation of the drill head is positioned in at least one of an angular range of 1 degree to 34 degrees, an angular range of 146 degrees to 179 degrees and an angular range of 326 degrees to 359 degrees on the delay side of the blade portion in the direction of the rotation when the position of the cutting edge of the blade portion is at 0 degree.

3. The guide portion arrangement structure of the drill head for cutting work as in claim 1 or 2, wherein
the third guide portion is arranged such that the portion of the third guide portion that is farthest in the radial direction from the center of rotation of the drill head is positioned in an angular range of 25 degree to 29 degrees on the delay side of the blade portion in the direction of the rotation when the position of the cutting edge of the blade portion is at 0 degree.

4. An arrangement method of a guide portion of a drill head used for cutting work while being supplied with cutting oil, the guide portion contacting an inner surface of a hole of a work piece at an outer periphery of the drill head and receiving a cutting force of a blade portion while maintaining a clearance for passing the cutting oil therethrough, **characterized by**:

arranging first to third guide portions on the outer periphery of the drill head as the guide portion;
assuming that the first guide portion is arranged such that a portion of the first guide portion that is farthest in a radial direction from the center of rotation of the drill head is positioned in an angular range of 80 degrees to 100 degrees on a delay side of the blade portion in the direction of the rotation when a position of a cutting edge of the blade portion is at 0 degree;
assuming that the second guide portion is arranged such that a portion of the second guide portion that is farthest in the radial direction from the center of the rotation of the drill head is positioned in an angular range of 170 degrees to 190 degrees on the delay side of the blade portion in the direction of the rotation when the position of the cutting edge of the blade portion is at 0 degree;
assuming that the third guide portion is arranged such that a portion of the third guide portion that is farthest in the radial direction from the center of the rotation of the drill head is positioned in at least one of an angular range of 1 degree to 89 degrees, an angular range of 91 degrees to 179 degrees and an angular range of 271 degrees to 359 degrees on the delay side of the blade portion in the direction of the rotation when the position of the cutting edge of the blade portion is at 0 degree;

providing equations of motion concerning changes of displacement of a boring bar attached with the drill head from a stationary cutting state respectively while changing the value of the arrangement angle ($\alpha_3$) of the third guide portion in the aforementioned angular ranges;

obtaining a characteristic equation based on the equations of motion;

obtaining a characteristic root s=o+jN of the characteristic equation in a case where an imaginary part N is close to each of integer values equal to or smaller than a predetermined number;

obtaining a range of the angle ($\alpha_3$), in which the maximum value of the real part $\sigma$ obtained is invariably negative for any N; and

setting the arrangement angle of the third guide portion such that the portion of the third guide portion farthest in the radial direction from the center of the rotation of the drill head is positioned in the obtained range of the angle ($\alpha_3$).

5. An arrangement method of a guide portion of a drill head used for cutting work while being supplied with cutting oil, the guide portion contacting an inner surface of a hole of a work piece at an outer periphery of the drill head and receiving a cutting force of a blade portion while maintaining a clearance for passing the cutting oil therethrough, **characterized by**:

arranging a first guide portion receiving a tangential component of the cutting force of the blade portion, a second guide portion receiving a radial component of the cutting force and a third guide portion, the first to third guide portions being arranged on the outer periphery of the drill head as the guide portion;

assuming that the second guide portion is arranged such that a portion of the second guide portion that is farthest in the radial direction from the center of rotation of the drill head is positioned in an angular range of 170 degrees to 190 degrees on the delay side of the blade portion in the direction of the rotation when a position of a cutting edge of the blade portion is at 0 degree;

assuming that the third guide portion is arranged such that a portion of the third guide portion that is farthest in the radial direction from the center of rotation of the drill head is positioned in at least one of an angular range of 1 degree to 89 degrees, an angular range of 91 degrees to 179 degrees and an angular range of 271 degrees to 359 degrees on the delay side of the blade portion in the direction of the rotation when the position of the cutting edge of the blade portion is at 0 degree;

providing equations of motion concerning changes of displacement of a boring bar attached with the drill head from a stationary cutting state respectively while changing the value of the arrangement angle ($\alpha_3$) of the third guide portion in the aforementioned angular ranges;

obtaining a characteristic equation based on the equations of motion;

obtaining a characteristic root s=$\sigma$+jN of the characteristic equation in a case where an imaginary part N is close to each of integer values equal to or smaller than a predetermined number;

obtaining a range of the angle ($\alpha_3$), in which the maximum value of the real part $\sigma$ obtained is invariably negative for any N; and

setting the arrangement angle of the third guide portion such that the portion of the third guide portion farthest in the radial direction from the center of the rotation of the drill head is positioned in the obtained range of the angle ($\alpha_3$).

Fig. 1

（A）

（B）

Fig. 2

Fig. 3

**Fig. 4**

(A)

3-sided polygon

(B)

4-sided polygon

(C)

5-sided polygon

**Fig. 5**

**(A)**

6-sided polygon

**(B)**

7-sided polygon

**(C)**

8-sided polygon

**Fig. 6**

**(A)**

9-sided polygon

**(B)**

10-sided polygon

**Fig. 7**

(A)

(B)

Fig. 8

Fig. 9

(A)

(B)

**Fig. 10**

Fig. 11

(A)

(B)

## INTERNATIONAL SEARCH REPORT

International application No.

PCT/JP2013/084617

### A. CLASSIFICATION OF SUBJECT MATTER
*B23B51/00*(2006.01)i

According to International Patent Classification (IPC) or to both national classification and IPC

### B. FIELDS SEARCHED

Minimum documentation searched (classification system followed by classification symbols)
B23B51/00, B23D77/00

Documentation searched other than minimum documentation to the extent that such documents are included in the fields searched
Jitsuyo Shinan Koho          1922-1996     Jitsuyo Shinan Toroku Koho     1996-2014
Kokai Jitsuyo Shinan Koho     1971-2014     Toroku Jitsuyo Shinan Koho     1994-2014

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | Microfilm of the specification and drawings annexed to the request of Japanese Utility Model Application No. 40427/1990(Laid-open No. 130314/1991)<br>(Unitac Inc.),<br>27 December 1991 (27.12.1991),<br>specification, page 2, lines 11 to 15; page 8, line 6 to page 9, line 14; fig. 1<br>(Family: none) | 1-2<br>3-5 |
| X<br>A | JP 2004-167645 A  (Unitac Inc.),<br>17 June 2004 (17.06.2004),<br>paragraph [0013]; fig. 1 to 2<br>(Family: none) | 1-2<br>3-5 |

☒    Further documents are listed in the continuation of Box C.      ☐    See patent family annex.

| | |
|---|---|
| *   Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    07 February, 2014 (07.02.14) | Date of mailing of the international search report<br>    04 March, 2014 (04.03.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/084617

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2010-155303 A  (Kyushu University), 15 July 2010 (15.07.2010), claims 1, 7, 8 (Family: none) | 1-5 |
| A | WO 2010/137712 A1  (Tungaloy Corp.), 02 December 2010 (02.12.2010), fig. 3, 6 & US 2012/0070243 A1    & EP 2436470 A1 & CA 2763953 A1          & CN 102448649 A | 1-5 |
| A | JP 6-8043 A  (Mapal Fabrik für Prazisionswerkzeuge Dr. Kress KG), 18 January 1994 (18.01.1994), paragraph [0016]; fig. 2 & US 5328304 A          & EP 558811 A1 & DE 4202751 A1 | 3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4951788 B